Europäisches Patentamt

(19) European Patent Office

Office européen des brevets

(11) Publication number: **0 027 697**

**A1**

(12) # EUROPEAN PATENT APPLICATION

(21) Application number: **80303507.0**

(22) Date of filing: **06.10.80**

(51) Int. Cl.³: **A 01 G 31/02**
**A 01 G 31/00**

(30) Priority: **19.10.79 GB 7936387**

(43) Date of publication of application:
**29.04.81 Bulletin 81/17**

(84) Designated Contracting States:
**FR GB IT NL**

(71) Applicant: **DUNLOP LIMITED**
**Dunlop House Ryder Street St. James's**
**London SW1Y 6PX(GB)**

(72) Inventor: **Anselm, Michael Anthony**
**1 Glebe Road**
**Fernhurst, Nr Haslemere, Surrey(GB)**

(74) Representative: **Waller, Roy Ernest Sykes et al,**
**Group Patent Department Dunlop Limited 2 Parade**
**Sutton Coldfield West Midlands B72 1PF(GB)**

(54) Channel structure and method suitable for plant growing.

(57) The invention relates to novel transportable apparatus and method for growing plants in nutrient solution. An inflatable article is provided which when inflated forms a channel structure suitable for accommodating a nutrient solution and roots of plants in contact with the solution. The inflation medium may be e.g. gas or air and if desired can be used as a temperature-control means i.e. variation of the nutrient solution can be achieved by adjustment of the temperature of the inflation medium.

FIG. III

EP 0 027 697 A1

0027697

## CHANNEL STRUCTURE AND METHOD SUITABLE FOR PLANT GROWING

This invention relates to a novel channel structure and method suitable for growing plants in a nutrient solution flowing along the base of the channel so that the roots of the plants are in contact with the solution.

In addition to the conventional methods of growing plants in soil, the so-called "hydroponic culture" method has been well received, the method being adapted for market gardening or flower growing in which the plants are grown on a sterile substrate which is maintained in continuous contact, e.g. by frequent watering, with an aqueous solution containing the nutrients which the plants would normally draw from the soil.

As well as what is strictly termed "hydroponic culture", other methods of culture in a liquid medium have been developed in which the roots are directly immersed in the liquid medium containing the necessary nutrients. These methods have been exploited in various ways e.g. by using tubular channels of plastic film open along their length in which plants are supported with their roots in a continuous shallow stream of nutrient solution, the so-called "nutrientfilm technique". In the "nutrient film technique" a plant may be placed directly in the channel or in a supporting means e.g. a pot or a cube of rock wool and in both cases the plant will quickly develop an extensive root mat which will be in continuous contact with a shallow stream of nutrient solution. Because only a shallow stream of nutrient solution is used, the upper surface of the root mat, although moist, is also in the air and this combination of conditions is excellent for healthy root development and hence plant growth.

The aforementioned channels are often of a pliable plastics material and require a rigid member to support them in the correct position e.g. as described in British Patent Specifications Nos. 1,545,273, 1,545,274, 1,545,275 and 1,545,276. Alternatively, a rigid plastics channel may be used which requires no separate support member. Whichever type of apparatus is used, at least one component tends to be bulky and therefore may cause transport problems. It is one object of the present invention to overcome this problem by providing a channel structure which is easily transportable. A further object of the present invention is to provide a channel structure which can also perform a thermal insulation function.

These aims may be achieved by one aspect of the present invention in which the channel structure is produced by inflating an inflatable structure. The inflatable structure can be manufactured so as to be readily transportable and the inflated nature of the channel structure will usually render it of some use as a thermal insulator for the contents of the channel.

According to another aspect of the present invention a method for growing plants in nutrient solution is characterised by use of the channel structure described in the preceding paragraph.

The channel structure may comprise two layers of material, e.g. of a plastics or rubber, joined at intervals, usually longitudinally of the channel, according to the configuration desired for the inflated channel. Examples of materials for the channel structure include those of plasticised poly(vinylchloride) which may be fibre-reinforced and natural or synthetic rubber which again may be fibre-reinforced. The material or materials selected should not of course be harmful to the crop which is to be grown in the resulting structure. Usually the resulting channel structure will be multi-sectional. For example, the structure may comprise two layers of material joined along parallel lines so that on inflation a number of adjoining parallel tubes are formed. In such a case it is preferable that the outer tubes are larger than the inner tubes as this type of construction will usually give some rigidity to the final structure and/or facilitate the formation of the channel structure to provide protection for plants within it e.g. from sunlight. Alternatively, the structure may comprise two layers of material joined along equidistant parallel lines such as is shown in Figure V. The elongate free edges of the structure may then be turned inwardly and bonded e.g. by a welding technique. The large and small sectioned tubing resulting can then be inflated to form a channel structure such as is shown in Figure VI. The channel structure may be connected in a tubular configuration so as to enclose at least the roots of a plant. Alternatively the channel structure may form the base and sides of the apparatus, flaps being provided to complete the enclosure of most of the plant. If desired a liner can be provided along the base of the resulting channel structure upon which both plant and nutrient solution can be supported or the inflated structure can itself fulfil the function of a liner by being provided with a suitable channel structure support which will both support it and maintain its shape.

The channel structure may be inflated by a gas (e.g. air) and/or a liquid (e.g. water) and if desired the inflation medium can be used as a temperature-control means. The inflation medium can either be circulated continuously through the channel structure or maintained substantially stationary in a sealed environment.

Embodiments of the present invention will now be described by way of example only with reference to the accompanying drawings, in which:

Figure I is a plan view of an inflated structure suitable for use in the present invention;
Figure II is a cross-sectional view along the line A-A of Figure I;

Figure III is a cross-sectional view of the inflated structure of Figure I assembled to enclose most of the plant;

Figure IV is a cross-sectional view of a multi-channel structure provided with flaps to enclose all but the leaves of a plant;

Figure V is a cross-sectional view of an inflated multi-channel structure;

Figure VI is a cross-sectional view of an adaptation of the multi-channel structure shown in Figure V which has been inflated and is suitable for use in the present invention.

Referring to Figures I and II, the structure comprises two layers 1 of a plastics or rubber material joined along parallel lines 2 to form a number of elongate parallel tubes 3. In the region of the article which in use will form the base of the channel structure the parallel lines do not extend the entire length, with the result that the end portion comprises a single inflated cushion 4. The portions 5 which in use will form the sides of the channel are larger than the remainder of the elongate tubes so as to improve the rigidity of the resulting channel. Each section of the structure is provided with an inlet/outlet 6 through which controlled inflation and deflation of that particular section can take place. The lateral edges 7 are provided with corresponding holes 8 at predetermined intervals.

Figure III shows the structure of Figure II wrapped around a potted plant and held in place by staples 9 through corresponding pairs of holes 8 in the edges 7.

To use the apparatus, a water or air supply (not shown) is connected in turn to the inlet/outlet 6 in each section of the structure until the desired degree of inflation is attained. The structure will then be as shown in Figure II and if desired can then be wrapped around a potted plant and held in place by passing staples 9 through the corresponding pairs of holes 8 in the lateral edges 7. The resulting structure will then be as shown in Figure III.

If desired water or air at a predetermined temperature can be continuously circulated through at least the tubes forming the base of the channel so as to act as a temperature-control device. When the structure is to be used as shown in Figure III the larger tubes 5 will usually be air-inflated as liquid-inflation could well cause a weight problem.

An aqueous solution containing the nutrients required for plant growth is then circulated by means not shown over the base of the channel structure. The end cushions 4 prevent spillage of the nutrient solution. The plants will soon develop an extensive root mat in the nutrient solution and thus healthy growth should result.

At the end of the growing season the channel structure can be dismantled, deflated and stored away completely.

Figure IV shows a cross-section of one complete multi-channel structure and part of another one consisting of two layers 1 of plastics or rubber joined along parallel lines to form a number of elongate parallel tubes 3 inflated by means of gas and/or liquid. The larger tubes 5, usually air-inflated, serve two purposes:

i) to determine the final shape of the individual plant troughs 10 and

ii) to give a certain amount of stability to the overall structure. Plants are spaced along the troughs and allowed to protrude through slots 11 in a covering 12, e.g. of a plastics material which may be light-reflective. The edges of the covering are each hooked over staples 13 each of which also passes through an edge of the multi-channel structure and the surface 14 upon which the structure rests. The operation of this type of structure is essentially similar to that already described for the channel shown in Figure III.

Figure V shows a cross-section of a structure made by joining two layers of material 15,16 along equidistant parallel lines and inflating the resulting product. The free edges 17,18 can be turned inwardly and bonded, e.g. by a welding technique, at 19 and 20. The resulting large and small sectioned tubes can then be inflated to form the channel structure of Figure VI. The operation of this type of structure is essentially similar to that already described for the channel shown in Figure III.

0027697

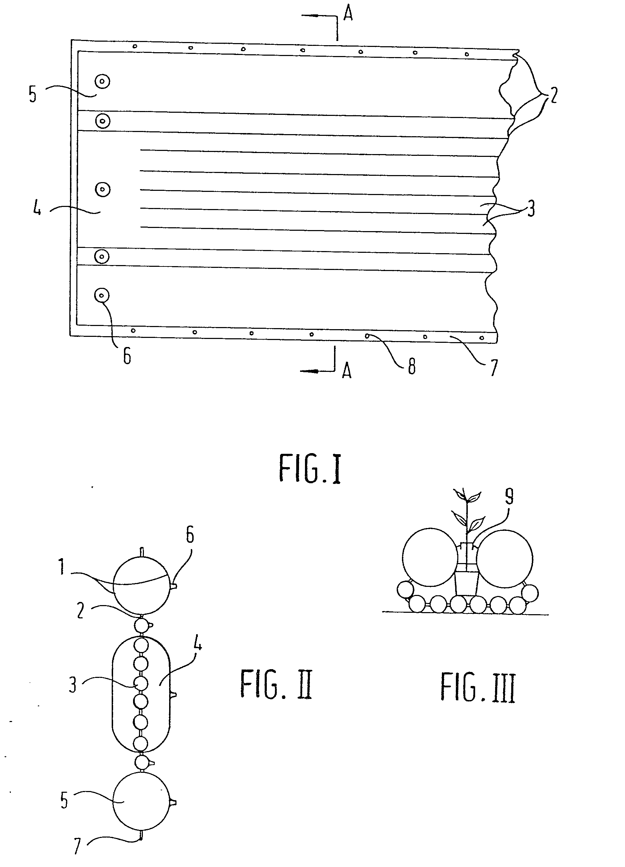

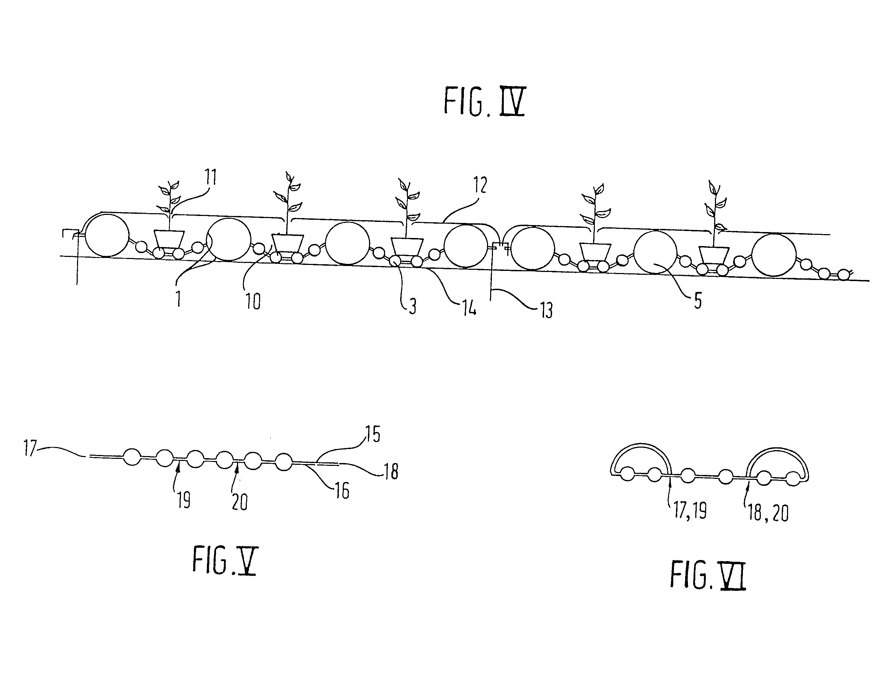

CLAIMS :

1. A channel structure suitable for growing plants in a nutrient solution flowing along the base of the channel so that the roots of the plants are in contact with the solution characterised in that the channel structure has been produced by inflating an inflatable structure.

2. A channel structure according to claim 1 characterised in that it is constructed from two flexible sheets (1) of the same or different material joined according to the configuration desired for the inflated channel.

3. A channel structure according to claim 2 characterised in that the sheets are joined together (2) intermittently longitudinally of the channel.

4. A channel structure according to claim 3 characterised in that the sidewalls of the channel (5) have a greater cross-sectional area than that of the or each inflated compartment forming the base of the channel.

5. A channel structure according to claim 2, 3 or 4 characterised in that it is constructed so that a single inflated compartment (4) is formed at one or both ends of the channel structure.

6. A channel structure according to any preceding claim characterised in that the longitudinal free edges (7) are joined together.

7. A channel structure according to claim 6 characterised in that the free edges (7) are welded together.

8. A channel structure according to claim 6 characterised in that means are provided to hold the edges (7) together.

0027697

9. A channel structure according to any preceding claim characterised in that it is provided with cover means (12) to overlie the structure.

10. A channel structure according to any preceding claim characterised in that it is provided with lining means upon which plants and nutrient solution can be supported.

11. A channel structure according to any preceding claim characterised in that means is provided for supporting and maintaining the channel shape.

12. A channel structure according to any preceding claim characterised in that the inflation medium is air.

13. A channel structure according to any one of claims 1 to 11 characterised in that the inflation medium is water.

14. An inflatable article characterised in that it is constructed so that on being inflated the inflated channel structure according to any preceding claim is provided.

15. A method of growing plants in nutrient solution wherein nutrient solution flows along the base of a channel structure in contact with the roots of the plants characterised in that the channel structure has the features defined in any one of claims 1 to 14.

16. A method according to claim 15 characterised in that the temperature of the nutrient solution is varied by adjustment of the temperature of the inflation medium in the channel structure.

FIG. I

FIG. II

FIG. III

FIG. IV

11    12

1    10    3    14    13    5

15
17    18
19    20    16

17,19    18,20

FIG. V                FIG. VI

-2/2-

0027697

## EUROPEAN SEARCH REPORT

Application number

EP 80 30 3507.0

| | DOCUMENTS CONSIDERED TO·BE RELEVANT | | CLASSIFICATION OF THE APPLICATION (Int Cl 3) |
|---|---|---|---|
| Category | Citation of document with indication, where appropriate, of relevant passages | Relevant to claim | |
| | DE - A - 2 037 013 (H. SCHREIBER) <br> * page 4, lines 20 to 24; page 5; fig. 1 * <br> -- | 1-3,15 | A 01 G 31/02 <br> A 01 G 31/00 |
| | US - A - 3 955 317 (C. GUDIN) <br> * column 2, lines 31 to 68; fig. 1, 2 * <br> -- | 1,12, 13,15 | |
| D,A | GB - A - 1 545 273 (A.C. ANSELM) <br> * page 1 to page 2, line 65; fig. 1 to 9 * <br> -- | | **TECHNICAL FIELDS SEARCHED (Int. Cl.³)** <br><br> A 01 G 9/00 <br> A 01 G 31/00 |
| D,A | GB - A - 1 545 274 (A.C. ANSELM) <br> * page 1, lines 1 to 64; fig. 1 to 9 * <br> -- | | |
| D,A | GB - A - 1 545 275 (A.C. ANSELM) <br> * page 1, lines 1 to 63; fig. 1 to 9 * <br> -- | | |
| D,A | GB - A - 1 545 276 (A.C. ANSELM) <br> * page 1, lines 1 to 75; fig. 1 to 9, 24 to 26 * <br> ---- | | **CATEGORY OF CITED DOCUMENTS** <br><br> X: particularly relevant <br> A: technological background <br> O: non-written disclosure <br> P: intermediate document <br> T: theory or principle underlying the invention <br> E: conflicting application <br> D: document cited in the application <br> L: citation for other reasons <br><br> &: member of the same patent family, corresponding document |

X The present search report has been drawn up for all claims

| Place of search | Date of completion of the search | Examiner |
|---|---|---|
| Berlin | 19-01-1981 | SCHOFER |

EPO Form 1503.1 06.78